# EUROPÄISCHE PATENTANMELDUNG

(11) **EP 1 106 891 A2**
(43) Veröffentlichungstag der Anmeldung: **13.06.2001**
(21) Anmeldenummer: 00116558.8
(22) Anmeldetag: 01.08.2000
(51) Int. Cl.: F16L 21/02

(54) **Rohrverbindung**

(30) Priorität: 11.12.1999 DE 29921841 U
(71) Anmelder: Gebr. Möck GmbH & Co. KG, 72072 Tübingen (DE)
(72) Erfinder: Möck, Klaus, 72072 Tübingen (DE)
(74) Vertreter: Möbus, Daniela, Dr.-Ing.

(57) **Zusammenfassung**

Eine Rohrverbindung (20) für Unterdruck- und Überdruckrohre (22), mit einem hohlzylindrischen, in ein Muffenteil (28) einsetzharen Dichtelement (21), wobei das Muffenteil (28) einen radial aufgeweiteten Bereich aufweist und das Dichtelement (21) derart ausgebildet ist, dass es ein Eindringen des in den Rohren geführten Mediums und/oder von Schmutzpartikeln in den Hohlraum (23) zwischen dem aufgeweiteten Bereich des Muffenteils (28) und einem Rohr (22) verhindert, wobei das Dichtelement (21) an seinem unteren Ende einen Anschlag (25) für das Rohr (22) aufweist, der einen direkten Kontakt zwischen dem Rohr (22) und dem weiterführenden Rohr (26) verhindert und der Innendurchmesser des Anschlags (25) gleich groß oder größer als der Innendurchmesser des Rohres (22) ist.

## Beschreibung

Die Erfindung betrifft eine Rohrverbindung für Unterdruck- und überdruckrohre mit einem hohlzylindrischen, in ein Muffenteil einsetzbaren Dichtelement nach dem Oberbegriff des Anspruchs 1.

Rohrverbindungen für überdruckrohre werden beispielsweise häufig in der Gebäudetechnik im Abwasserbereich eingesetzt. Rohrverbindungen für überdruckrohre weisen im oberen Bereich der Rohrverbindung ein hohlzylindrisches Dichtelement auf, das zwischen dem Rohr und einem Muffenteil eingeklemmt ist und somit ein Austreten des Abwassers verhindert. Im mittleren Bereich der Rohrverbindung, unterhalb des hohlzylindrischen Dichtelelements, weist das Muffenteil einen radial aufgeweiteten Bereich auf, unterhalb von dem eine Rohrschelle befestigt werden kann. Durch diesen aufgeweiteten Bereich entsteht ein Hohlraum zwischen dem Muffenteil und dem Rohr. Der daran anschließende untere Bereich des Muffenteils weist einen radialen Abstand zum Rohr auf, sodass im Abwasser enthaltene Schmutzpartikel in den Hohlraum eintreten können und sich dort ansammeln, was unerwünscht ist.

Ferner kennt man nach dem heutigen Stand der Technik Rohrverbindungen für Unterdruckrohre, wie sie beispielsweise von Entwässerungseinrichtungen bei Schiffen und Entstaubungsanlagen bekannt sind. Diese Unterdruck-Rohrverbindungen weisen im Vergleich zu den Rohrverbindungen für Überdruck-Anwendungen eine andere Gestalt auf. Es ist hier kein Hohlraum zwischen dem Muffenteil und dem eingeschobenen Rohr vorhanden. Bei den bekannten Verbindungen kommt es allerdings zu Turbulenzen beim Mediendurchtritt durch die Verbindung. Außerdem sind in den Rohrverbindungen für Unterdruckrohre andere Dichtelemente als für Rohrverbindungen im überdruck-Anwendungsfall im Einsatz. Dies erfordert eine doppelte Lagerbevorratung sowohl an Rohrund Formstückteilen wie auch an Dichtelementen.

Die vorliegende Erfindung hat die Aufgabe, Rohrverbindungen für Überdruck- und Unterdruckrohre dahin gehend zu verbessern, dass es zu keinen Verwirbelungen und Ablagerungen des Mediums beim Durchtritt durch die Rohrverbindung kommt und die seither notwendige doppelte Lagerbevorratung an Verbindungsteilen zukünftig entfällt.

Die Erfindung löst die gestellte Aufgabe mit einer Rohrverbindung für Unterdruck- und überdruckrohre mit den Merkmalen des Anspruchs 1. Dadurch, dass der Anschlag des Dichtelements nicht nach innen über die Rohrwandung vorsteht, kommt es bei den erfindungsgemäßen Rohrverbindungen zu keinen Verwirbelungen des Mediums. Auch Ablagerungen von Schmutzpartikeln in der Verbindung sind ausgeschlossen. Außerdem kann zukünftig durch die Verwendung ein und derselben Rohrverbindung mit ein und demselben Dichtelement sowohl für Überdruck- als auch für Unterdruckrohre eine doppelte Lagerbevorratung an Rohr- und Formteilen und Dichtelementen entfallen, wodurch erheblich Kosten eingespart werden können. Des Weiteren kann es zukünftig keine Verwechslungen mehr geben, bei denen versehentlich eine Rohrverbindung für drucklose Rohre bei einem druckbeaufschlagten Rohr eingesetzt wird.

Das Dichtelement weist an seinem unteren Ende einen Anschlag für das Rohr auf, der einen direkten Kontakt zwischen dem Rohr und dem weiterführenden Rohr verhindert. Dadurch wird eine Schallübertragung zwischen den Rohren vermieden, was insbesondere beim Einsatz der Verbindungen in der Gebäudetechnik zur Lärmreduzierung von Vorteil ist. Der Innendurchmesser des Anschlags ist dabei so bemessen, dass er gleich groß oder größer als der Rohrinnendurchmesser ist, damit es zu keinen Verwirbelungen oder Ablagerungen kommen kann.

Das obere Ende des Dichtelements kann einen am oberen Ende des Muffenteils aufstehenden Rand bilden. Dieser Rand übernimmt die Funktion eines weiteren Anschlages. Beim Einschieben des Dichtelements in die Muffe bildet dieser Anschlag am oberen Ende des Dichtelements eine Begrenzung, die auch verhindert, dass das Dichtelement beim anschließenden Einschieben des Rohres mit eingezogen wird. Der Anschlag bildet außerdem eine optische Kontrollmöglichkeit, dass das Dichtelement perfekt zwischen Rohr und Muffenteil sitzt. Auf diese Weise kann die Kombination aus Rohr, Dichtelement und Muffenteil mit wenigen Handgriffen ohne Werkzeug und in kürzester Zeit zusammengebaut und zugleich visuell auf Funktionstüchtigkeit hin geprüft werden.

Das Dichtelement kann in seinem oberen Bereich oder insgesamt aus einem harten Werkstoff gefertigt sein. Dadurch kann die Rohrverbindung gegen wesentlich höhere Drücke abgedichtet werden, als wenn das Dichtelement aus einem weicheren Material gefertigt wäre.

Vorteilhafterweise kann das Dichtelement aus SBR gefertigt sein.

Besonders gute Dichteigenschaften weist das Dichtelement auf, wenn es aus einem Werkstoff mit einem Härtegrad von mindestens 80 IRHD gefertigt ist.

Da es von der Montage her ungünstig ist, wenn der Abstand zwischen dem Muffenteil und dem Rohr genau der Wandstärke des Dichtelements entspricht, kann die Wandstärke des Dichtelements in großen Bereichen kleiner als der Abstand zwischen der Rohrmuffen-Innenwandung und dem Rohr sein. Zur Erzielung der Dichtwirkung kann das Dichtelement mit außen umlaufenden Dichtlippen versehen sein. Dadurch, dass die Wandstärke des Dichtelements außer in den Bereichen der Dichtlippen kleiner ist als der Abstand zwischen der Muffen-Innenwand und dem Rohr, kann das Rohr ohne große Mühe in die bereits in der Muffe platzierte Dichtung eingeschoben werden. Durch die außen am Dichtelement umlaufenden Dichtlippen wird das unerwünschte Eindringen von Flüssigkeit und Schmutzpartikeln zwischen das Dichtelement und die Rohrmuffe verhindert.

Nachfolgend wird ein Ausführungsbeispiel sowohl zum Stand der Technik als auch zur Erfindung anhand der beiliegenden Zeichnungen näher beschrieben.

Im Einzelnen zeigen:
- Fig. 1: einen Längsschnitt durch eine Rohrverbindung entsprechend dem Stand der Technik;
- Fig. 2: einen Teillängsschnitt durch eine erfindungsgemäße Rohrverbindung;
- Fig. 3: einen Längsschnitt durch ein Dichtelement.

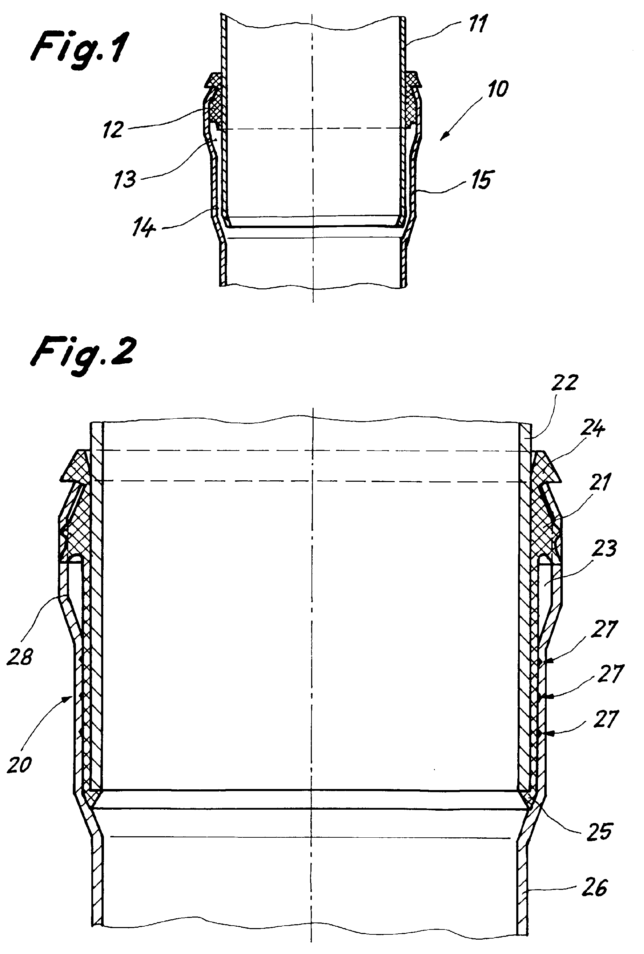

Fig. 1 zeigt eine Rohrverbindung 10 entsprechend dem Stand der Technik. Zwischen einem Muffenteil 15 und einem Rohr 11 ist ein Dichtelement 12 eingesetzt. Zwischen dem mittleren Bereich des Muffenteils 15 und dem Rohr 11 befindet sich ein Hohlraum 13, und im unteren Bereich des Muffenteils 15 befindet sich zwischen dem Muffenteil 15 und dem Rohr 11 ein Zwischenraum 14. Durch den Zwischenraum 14 kann Medium, beispielsweise Abwasser, in den Hohlraum 13 gelangen, wodurch sich Schmutzpartikel im Hohlraum 13 unerwünschterweise ansammeln können.

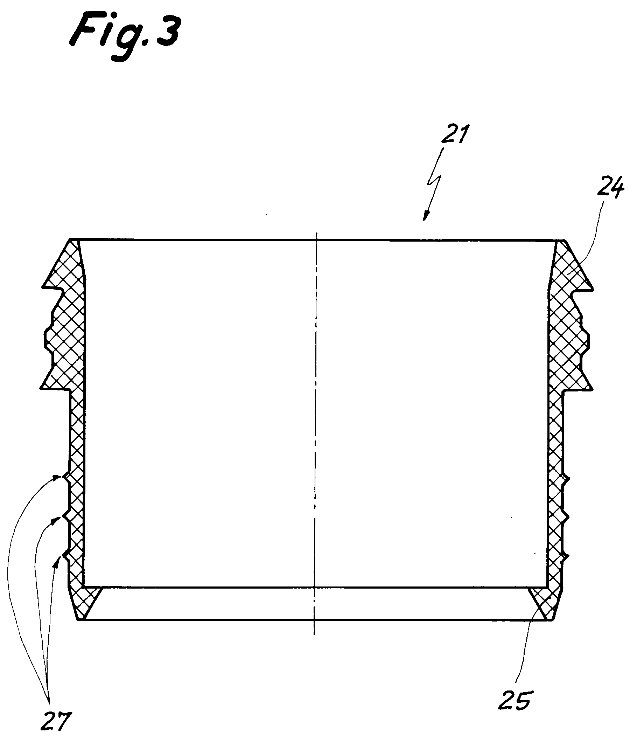

Fig. 2 zeigt eine erfindungsgemäße Rohrverbindung 20, in die ein Dichtelement 21 eingesetzt ist, in das wiederum ein Rohr 22 eingesteckt ist. Das Dichtelement 21 erstreckt sich über die gesamte Länge eines Muffenteils 28. Außen am Dichtelement 21 umlaufende Dichtlippen 27 dichten einen Hohlraum 23 zwischen dem Dichtkörper 21 und dem Muffenteil 28 zuverlässig ab. Durch diese Abdichtung des Hohlraums 23 ist ein Eindringen von Medium und/oder Schmutzpartikeln ausgeschlossen. Das Muffenteil 28 geht in seinem unteren Bereich in ein weiter führendes Rohr 26 über. Um die Montage des Rohres 22 mit dem Dichtelement 21 und dem Muffenteil 28 schnell und einfach zu gestalten, weist das Dichtelement 21 einen Anschlag 24 auf. Bei der Montage wird das Dichtelement 21 bis zum Anschlag 24 in das Muffenteil 28 eingeführt. Anschließend wird das Rohr 22 in das Dichtelement 21 bis zum Anschlag 25 eingeschoben. Der Anschlag 25 verhindert dabei einen direkten Kontakt des Rohres 22 mit dem weiterführenden Rohr 26, wodurch eine Schallübertragung zwischen den beiden Rohren 22 und 26 unterbunden wird. Der Anschlag 25 schließt außerdem nach innen bündig mit dem Innendurchmesser des Rohres 22 ab, sodass er keine Verwirbelungen im Medienstrom verursachen kann.

Fig. 3 zeigt das Dichtelement 21 aus Fig. 2 in einer Einzeldarstellung. Es weist umlaufende Dichtlippen 27 auf, die eine zuverlässige Abdichtung zwischen dem Dichtelement 21 und dem Muffenteil 28 aus Fig. 2 bewirken. Der Anschlag 24 verhindert, dass das Dichtkörper 21 beim Einschieben des Rohres 22 in das Muffenteil 28 hineingedrückt wird, und erlaubt eine visuelle Funktionsprüfung. Der zweite Anschlag 25 gewährleistet, dass das Rohr 22 beim Einschieben in das Dichtelement 21 nicht in Kontakt mit dem weiterführenden Rohr 26 gelangt.

## Patentansprüche

1. Rohrverbindung (20) für Unterdruck- und überdruckrohre (22), mit einem hohlzylindrischen, in ein Muffenteil (28) einsetzbaren Dichtelement (21), wobei das Muffenteil (28) einen radial aufgeweiteten Bereich aufweist, wobei das Dichtelement (21) derart ausgebildet ist, dass es ein Eindringen des in den Rohren geführten Mediums und/oder von Schmutzpartikeln in den Hohlraum (23) zwischen dem aufgeweiteten Bereich des Muffenteils (28) und einem Rohr (22) verhindert, dadurch gekennzeichnet, dass das Dichtelement (21) an seinem unteren Ende einen Anschlag (25) für das Rohr (22) aufweist, der einen direkten Kontakt zwischen dem Rohr (22) und dem weiterführenden Rohr (26) verhindert, wobei der Innendurchmesser des Anschlags (25) gleich groß oder größer als der Innendurchmesser des Rohres (22) ist.

2. Rohrverbindung (20) nach Anspruch 1, dadurch gekennzeichnet, dass die Wandstärke des Dichtelements (21) außer in Bereichen von außen am Dichtelement (21) umlaufenen Dichtlippen (30) kleiner als der Abstand zwischen der Innenwand des Muffenteils (28) und dem Rohr (22) ist.

3. Rohrverbindung (20) nach Anspruch 1 oder 2, dadurch gekennzeichnet, dass das obere Ende des Dichtelements (21) einen am oberen Ende des Muffenteils (28) aufstehenden Rand (24) bildet.

4. Rohrverbindung (20) nach einem der Ansprüche 1 bis 3, dadurch gekennzeichnet, dass das Dichtelement (21) in seinem oberen Bereich oder insgesamt aus einem harten Werkstoff gefertigt ist.

5. Rohrverbindung (20) nach einem der Ansprüche 1 bis 4, dadurch gekennzeichnet, dass das Dichtelement (21) aus SBR gefertigt ist.

6. Rohrverbindung (20) nach einem der Ansprüche 1 bis 5, dadurch gekennzeichnet, dass der Werkstoff des Dichtelements (21) einen Härtegrad von mindestens 80 IRHD aufweist.
